# EUROPEAN PATENT APPLICATION

(11) **EP 4 603 346 A1**
(43) Date of publication of application: **20.08.2025**
(21) Application number: 24157297.3
(22) Date of filing: 13.02.2024
(51) Int. Cl.: B60T 13/74, B60T 17/22, F16D 65/16, F16D 66/00

(54) **ELECTROMECHANICAL BRAKE ACTUATOR FOR A BRAKE UNIT**

(71) Applicant: KNORR-BREMSE Systeme für Nutzfahrzeuge GmbH, 80809 München (DE)
(72) Inventor: Szabó, János, 1101 Budapest (HU); Kokrehel, Csaba, 1119 Budapest (HU); Hös, Levente, 1047 Budapest (HU); Lorinczi, Ottó Botond, 1038 Budapest (HU)

(57) **Abstract**

Disclosed is an electromechanical brake actuator (100) for a brake unit, wherein the brake unit comprises a brake mechanism (210) configured to convert an actuation force (10) from the brake actuator (100) into a brake force (20) for braking a wheel or an axle. The electromechanical brake actuator (100) comprises an electric motor (110), configured to provide the actuation force (10), and a sensor (120), configured to generate output data for measuring the actuation force (10).

## Description

The present invention relates to an electromechanical brake actuator for a brake unit. The brake unit comprises a brake mechanism configured to convert an actuation force from the brake actuator into a brake force for braking a wheel or an axle. The electromechanical brake actuator comprises an electric motor, configured to provide the actuation force for the brake mechanism, and a sensor, configured to generate output data for measuring the actuation force.

The brake actuator is thus understood to be an electrically operated mechanical device configured to provide the actuation force for operating the brake mechanism. The actuation force may be a linear force. The actuator contains both the electric motor and the sensor. The actuator may be configured to receive electric energy for running and for controlling the electric motor. In some embodiments, the actuator may also be configured to provide electric energy to the sensor. The actuator may be realized as a sub-unit within the brake unit, and in particular comprise a housing configured to contain the electric motor and the sensor. In advantageous embodiments, the actuator is a demountable entity within the brake unit, and may be configured to facilitate maintenance or service separately from a rest of the brake unit.

The brake unit may be a part of a brake system of a vehicle, and configured to brake a particular wheel or axle of the vehicle. The vehicle may e.g. be a road or a rail vehicle. In some embodiments, the vehicle is an electric vehicle, i.e., configured to be propelled by one or more electric motors. However, this is not necessarily the case. In some embodiments, the vehicle is a commercial vehicle. The commercial vehicle may be a truck or towing vehicle of a commercial vehicle combination, a trailer, or a truck-trailer combination.

In other embodiments, the brake unit may be configured to brake an axle in a wind engine or turbine.

The sensor is configured to measure a physical quantity within the electromechanical brake actuator, and based thereon generate output data which allows for a measurement of the actuation force, i.e., from which a magnitude and/or direction of the actuation force can be obtained. It is understood that the sensor is configured to transmit the output data to some electronic control unit, which may be comprised within or outside of the brake unit.

The sensor may be configured to directly measure the actuation force, i.e., the output data may immediately comprise a magnitude and/or direction of the actuation force. In other embodiments, the sensor may be configured to measure the actuation force indirectly, i.e., the output data may comprise information from which the magnitude of the actuation force can then be calculated.

In embodiments, the electric motor is configured to exert a motor torque, e.g. by means of a drive shaft, on a conversion mechanism comprised in the electromechanical brake actuator. The conversion mechanism is configured to convert the motor torque into the actuation force. In particular, the conversion mechanism may comprise a component to apply the actuation force as a linear force to the brake mechanism. The motor may thus be configured to provide the actuation force indirectly, i.e., by means of the conversion mechanism. The conversion mechanism may be configured to operate purely mechanically, i.e., to convert the motor torque of the electric motor by means of gears, threads, or levers and the like. The sensor may be configured to measure a physical quantity of the motor (e.g., the torque at the drive shaft), or of some component of the conversion mechanism.

Optionally, the sensor is attached to a fixed component of the conversion mechanism, and/or to the housing of the brake actuator. This can have the advantage that a connection of the sensor for transmitting the output data, or for providing electric energy to the sensor, can be realized more easily.

Optionally, the conversion mechanism comprises a spindle nut and a spindle, wherein the spindle nut is supported by a thrust bearing, and the sensor is configured to measure a force exerted on the thrust bearing. The spindle nut is a rotatable component of the conversion mechanism, and configured to cause a translation of the spindle which may thus transmit a linear force. The linear force may in particular be the actuation force, i.e., the spindle may be the component of the conversion mechanism configured to apply the actuation force to the brake mechanism.

By means of the spindle nut and the spindle, the actuation force can be controlled very precisely. The precision can be further enhanced by mechanical gears comprised in the conversion mechanism, configured to transfer the motor torque to the spindle nut. In particular, in order to achieve a high precision the conversion mechanism may be configured to convert a high number of rotations of a drive shaft of the electric motor into a relatively short translation of the spindle. It may be advantageous to configure the electric motor to provide a relatively fast rotation of the drive shaft, such that for a given power a low torque is converted into a relatively high actuation force.

When the motor provides the actuation force, the sensor being attached to the fixed component of the conversion mechanism, or directly or indirectly to the housing of the brake actuator, thus does not move.

Optionally, however, the sensor is attached to a movable component of the conversion mechanism. This can provide the advantage that the sensor can measure the actuation force more directly. The sensor may be attached to a gear of the conversion mechanism, or immediately to a component which is configured to output the actuation force from the electromechanical brake actuator for applying it to the brake mechanism.

Optionally, in embodiments where the conversion mechanism comprises a spindle nut and a spindle, the sensor is attached to the spindle.

The output data of the sensor may be directed out of the electromechanical brake actuator by electronic wiring. The output data will generally be transmitted to some electronic control unit, which may be located within the brake unit or elsewhere in the vehicle. In some embodiments, output data may be transmitted immediately to several receiving ends, e.g. by connecting the sensor to a CAN bus of the vehicle.

In some embodiments, the sensor may be configured to transmit the output data wirelessly. This may reduce complexity, and can be particularly advantageous if the sensor is attached to the movable component of the conversion mechanism. The wireless transmission may be based on capacitive, inductive and/or radiative principles.

Optionally, the brake actuator itself comprises an electronic control unit configured to control the electric motor, and the control unit of the electric motor is configured to receive the output data from the sensor. The electronic control unit may comprise a printed circuit board, which may e.g. be attached either to an inner side or to an outer side of a housing of the electromechanical brake actuator. Advantages of this setup comprise that the initial communication distance of the output data is short, such that electromagnetic interferences can be reduced, and/or such that near-field inductive or capacitive transmission techniques may be employed to transmit the output data.

In embodiments, such near-field techniques can also be employed to transmit power to the sensor. The power can thus reach the sensor, and can be controlled, by the same control unit which also controls the electric motor. In embodiments, the control unit may be configured such that all communication and power transfer between the electromechanical brake actuator and a rest of the brake system or vehicle occurs via the control unit.

Optionally, the control unit is configured to adjust a control of the electric motor based on the output data. The term "adjust" may be understood to refer to making changes to the way in which the electric motor is operated, in order to correct the actuation force and thus ultimately the brake force. The actuation force and/or brake force may require correction due to many reasons, many of which may arise in the brake mechanism of the brake unit. In particular, parts of the brake mechanism and/or the electromechanical brake actuator (such as e.g. the spindle) may heat up during normal use of the brake. This can entail changes in dimensions (such as length or thickness) of the affected parts, which moreover may vary due to details of heat propagation, different materials, or small mechanical defects in all parts of the brake unit. There can thus be a change of size and/or position of the movable component configured to apply the actuation force to the brake mechanism, due to temperature in particular, but also due to wear or strain effects. The control unit may be configured to measure the actuation force based on the output data and compare results with power levels of the operation of the electric motor.

If a relation between the actuation force and the power levels changes over time, the control unit may be configured to adjust the control of the electric motor accordingly. For example, if for a given power level provided to the motor, the actuation force is found to be reduced or increased compared to a situation at an earlier point in time, or in comparison to some standard, the power level may correspondingly be increased or reduced, respectively, such that the magnitude of the actuation force is kept within a narrow tolerance. The control unit may comprise simple electronic storage facilities to store data about standard relations, or characteristics of the relation between energy provided to the electric motor and measured actuation force. The control unit may however also comprise a data communication connection in order to retrieve such data from other parts of the vehicle.

Optionally the sensor comprises at least one out of a strain gauge, a piezoelectric element, a load cell, or, where appropriate, means for measuring a distance, or a position of the movable component. Load cells may be particularly cost-effective solutions for measuring the actuation force. Means for measuring a distance, or a position of the movable component, may comprise an eddy current sensor, a hall sensor, or a conductive or capacitive proximity sensor.

Embodiments further relate to a disk brake unit for a wheel or an axle of a vehicle, wherein the disk brake unit comprises a caliper with disk pads configured to brake a disk fixed to the wheel and an electromechanical brake actuator of a kind disclosed above, wherein the disc brake unit is in particular configured such that the actuation force is applied to the caliper for braking the wheel or axle (i.e., the electromechanical brake actuator is configured to apply the actuation force on the caliper).

Embodiments further relate to a drum brake unit for a wheel of a vehicle, wherein the drum brake unit comprises a brake shoe configured to brake a drum fixed to the wheel and an electromechanical brake actuator of a kind disclosed above, wherein the drum brake unit is in particular configured such that the actuation force is applied to the brake shoe for braking the wheel (i.e., the electromechanical brake actuator is configured to apply the actuation force on the brake shoe). The drum brake can comprise more than one brake shoe.

It will be appreciated by the person skilled in the art that while an embodiment of the electromechanical brake actuator adapted for a disk brake and an embodiment of the electromechanical brake actuator adapted for a drum brake rely on the same principles, requirements on their dimensions and shapes are rather different. In particular, the electromechanical brake actuator for the drum brake can have a conversion mechanism with two translatable components moving equal distances in opposite directions, and require different embodiments and/or numbers of sensors.

Embodiments further relate to a method for measuring a brake force exerted by a brake unit comprising a brake mechanism configured to convert an actuation force from an electromechanical brake actuator into a brake force or torque for braking the wheel. The method comprises providing the actuation force based on an electric motor comprised in the brake actuator. The method further comprises generating output data for measuring the actuation force by a sensor comprised in the brake actuator. The method further comprises measuring the actuation force based on the output data. The method further comprises determining the brake force based on the measured actuation force. The method may in particular be carried out by means of an electromechanical brake actuator as disclosed above. The steps of the method may be carried out, or can be repeated, in different orders, or following various patterns. The method may comprise further steps as suggested by the features described for the disclosed electromechanical brake actuator. In particular, the method may comprise adjusting a control of the electric motor based on the output data and/or the magnitude of the actuation force.

Aspects of the electromechanical brake actuator and the disk or drum brake units include the following.

In conventional systems, brake force measurement can be implemented by sensors placed at various points of the brake mechanism, such as on the brake caliper (e.g. on the caliper frame or on the caliper lever).

Electromechanical brake actuators without integrated force measurement can thus only be used on dedicated brake calipers or brake shoes equipped with their dedicated means of force measurement. Applying a sensor integrated into the electro-mechanical actuator enables a use of the actuator also for brakes with conventional brake calipers, or brake shoes. In case of an actuator-integrated sensor, the actuation force can be measured, which is generally lower by an order of magnitude compared to the clamping force of the caliper, or the torque transmitted by the brake shoe.

The disclosed electromechanical brake actuator is equipped with a sensor, i.e. an actuation force measurement device, which is integrated into the actuator. Since the actuation force measurement is realized within the electromechanical brake actuator, the electromechanical brake actuator can be made compatible in particular with any brake mechanism currently operated by conventional pneumatic brake actuators. In contrast, conventional electromechanical brake actuators which do not measure the actuation force can only be applied on brake mechanisms designed and produced for electromechanical braking.

Embodiments of the electromechanical brake actuator comprise, within a housing, an electric motor, transmission gears between the motor and a spindle, a spindle nut, the spindle, a thrust bearing, and the sensor for the actuation force measurement.

The electric motor is used to power the device. The motor may be connected to transmission gears, which may transfer power in particular to a ball spindle, more precisely to the spindle nut. The rotating spindle nut then transfers the power to the (non-rotating) spindle, which can move axially and push the brake mechanism, e.g. a caliper.

In a first type of such embodiments of the electromechanical brake actuator, the sensor may comprise a ring-type load cell, located behind the thrust bearing of the spindle nut, and supported by the housing of the actuator.

In a second type of such embodiments of the electromechanical brake actuator, the sensor may comprise a cylindrical load cell, located inside the spindle, and supported on a base face of a spindle bore.

The main difference between the first type and the second type of these embodiments is that in embodiments of the first type, the sensor is stationary, while in embodiments of the second type, the sensor moves with the spindle. While force is applied on the brake mechanism, e.g. a caliper, the spindle and also the thrust bearing are loaded accordingly, and the actuation force can be measured.

The electromechanical brake actuator may comprise a control unit, configured to control the brake force and averting anomalies caused by various effects such as temperature fluctuations, changes of an air gap, or pad wear conditions.

Advantages of the disclosed electromechanical brake actuator include that the sensor can be covered from either dirt which may enter the brake mechanism, or from heat produced by the brake during normal use of the brake unit.

Advantages also include that the electromechanical brake actuator can be manufactured to fit in a variety of pneumatic, hydraulic, or electromechanical brake units. In particular, slave or wheel cylinders in existing pneumatic or hydraulic brake units can be replaced by an embodiment of the disclosed electromechanical brake actuator. It is understood that for any brake mechanism, the brake force can be determined once the actuation force is known.

Advantages also include that the sensor may be placed in proximity of, and connected to, a control unit for the electric motor. The control unit may be configured, or reconfigured, to receive the output data of the sensor, and also to adjust a control of the electric motor to correct the actuation force, and by this the brake force. The determination of correction parameters of the brake force can thus be achieved in the electromechanical brake actuator, i.e. in the brake unit, rather than in some other part of the vehicle or system. The proximity of the control unit also allows to use capacitive and/or inductive transfer of data and energy.

Advantages also include that the sensor may be placed in proximity of, and connected to, a connection for electric energy for the electric motor. The connection for electric energy may be configured, or reconfigured, to provide energy also to the sensor, if so required. Thus a need to install further physical wiring to establish a connection of the brake actuator to an energy source may be avoided.

Some embodiments of the electromechanical brake actuator and the method will be described in the following by way of examples only, and with respect to the accompanying figures, in which:
- Fig. 1: depicts an embodiment of the electromechanical actuator according to the present invention.
- Fig. 2: depicts further details for embodiments of the electromechanical actuator.
- Fig. 3: depicts further details for an embodiment of the electromechanical actuator.
- Fig. 4: shows steps of a method for determining a brake force according to the present invention.

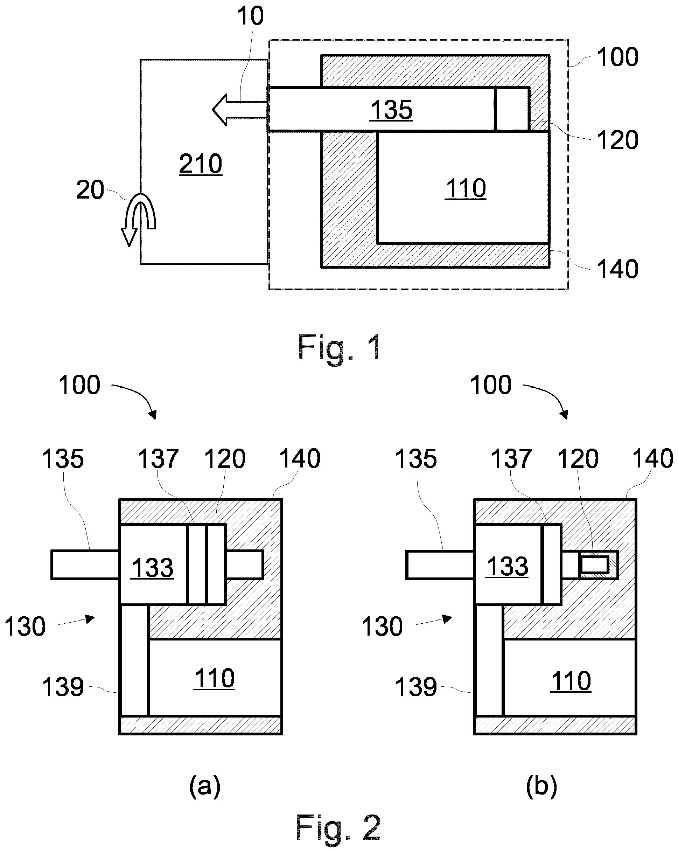

**Fig. 1** depicts an electromechanical brake actuator 100 for a brake unit. The brake unit comprises a brake mechanism 210 configured to convert an actuation force 10 from the brake actuator 100 into a brake force 20 or torque for braking a wheel or an axle. For a disk brake, the brake mechanism 210 may comprise a caliper, and a brake disk. For a drum brake, the brake mechanism 210 may comprise one or more brake shoes, and a brake drum.

The electromechanical brake actuator 100 comprises an electric motor 110, which is configured to provide the actuation force 10 for the brake mechanism 210. The actuation force 10 may be a linear force acting, respectively, on the caliper or on the brake shoes.

The electromechanical brake actuator 100 further comprises a sensor 120, configured to generate output data for measuring the actuation force 10. The sensor 120 may be configured to measure the actuation force 10 directly, e.g. from a movable component 135 which is configured to apply the actuation force 10 to the brake mechanism 210. In other embodiments, the sensor 120 may be configured to measure the actuation force 10 indirectly. In some embodiments, the sensor 120 may be configured to measure a force or torque at a different component of the actuator 100, in particular at a drive shaft of the electric motor 110, or at a component configured to transmit a torque from the drive shaft to the movable component 135 which applies the actuation force 10 to the brake mechanism 210. A force acting on a particular component of the actuator 100 may be measured by a load cell, or by measuring a strain on the component. In some embodiments, the sensor 120 may be configured to measure some other related physical quantity from which the actuation force 10 can be inferred, such as a distance between components in the actuator.

As one of its components, the electromechanical brake actuator 100 may comprise a housing 140, which contains both the electric motor 110 and the sensor 120. The housing 140 may also contain the movable component 135 which applies the actuation force 10 to the brake mechanism 210.

**Fig. 2** depicts further details for two embodiments of the electromechanical brake actuator 100. In both embodiments, the electromechanical brake actuator 100 comprises, within the housing 140, the electric motor 110, and a conversion mechanism 130 with a rotatable component 133 and a translatable component 135, and further transmission components 139. The rotatable component 133 and the translatable component 135 may be, respectively, a spindle nut and a spindle. The conversion mechanism 130 further comprises a thrust bearing 137 for the spindle nut 133. The housing 140 may provide stability, as well as mechanical and heat protection, for the electric motor 110, the conversion mechanism 130, and the sensor 120.

In a part (a) of the figure, the sensor 120 is located behind the thrust bearing 137 of the spindle nut 133, and supported by the housing 140, or some component fixed to the housing 140. The sensor 120 may be realized as, or comprise, a ring-type load cell.

In a part (b) of the figure, the sensor 120 is attached to the movable spindle 135 and located inside the spindle nut 133, supported by a base face of a spindle bore. The sensor 120 may be realized as, or comprise, a cylindrical load cell.

A difference between the two depicted embodiments is that in the embodiment of part (a) of the figure, the sensor 120 is stationary (i.e., fixed relative to the housing), while in the embodiment of part (b) of the figure, the sensor 120 is configured to move with the spindle 135. When force is applied on the brake mechanism 210, e.g. on a brake caliper, the spindle 135 and also the thrust bearing 137 are loaded accordingly, and the actuation force 10 can be determined in each embodiment.

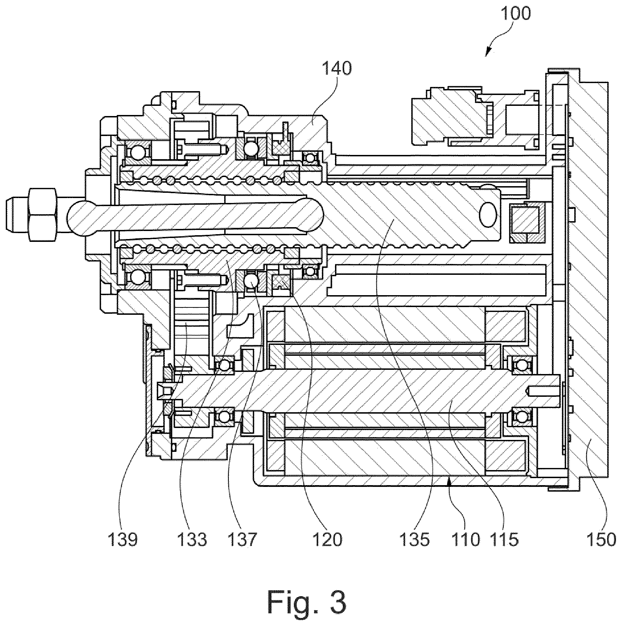

**Fig. 3** depicts further details for an embodiment of the electromechanical brake actuator 100. The embodiment is of the type shown in part (a) of Fig. 2.

Within a housing 140, the electromechanical brake actuator 100 comprises the electric motor 110 with a drive shaft 115. A motor torque of the drive shaft 115 is transferred to a spindle nut 133 by means of transmission gears 139. The spindle nut 133, which is a rotating component of a spindle unit, transfers a power to a non-rotating ball spindle 135, which can move axially and push a lever of a brake caliper.

The spindle nut 133 is supported by a thrust bearing 137. The sensor 120 is attached to a part of the housing 140 located behind the thrust bearing 137, and configured to measure a force exerted on the thrust bearing 137.

The electromechanical brake actuator 100 comprises a control unit 150, which is configured to control the electric motor 110. The control unit 150 is also configured to control the brake force 20, and to avert anomalies caused by effects such as temperature fluctuations, changes of the air gap and pad wear conditions. To this end, the control unit 150 may be configured to adjust the control of the electric motor 110, based on the output data of the sensor 120.

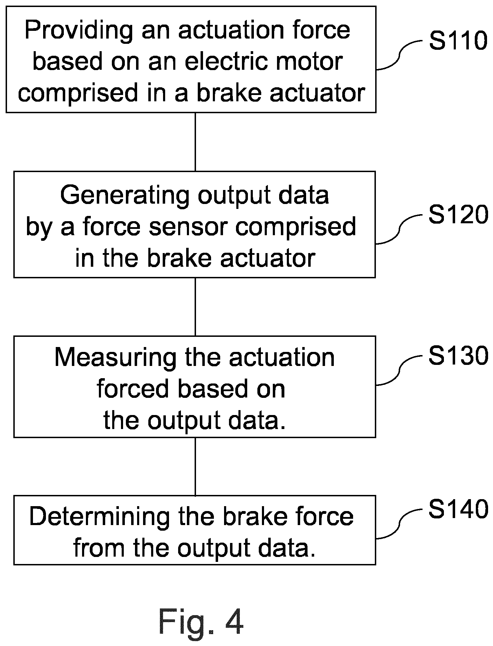

**Fig. 4** shows steps of a method for determining, by measurement, a brake force 20 exerted by a brake unit on a wheel or on an axle. The brake unit comprises a brake mechanism 210, configured to convert an actuation force 10 into a brake force 20 for braking the wheel or the axle. The method comprises providing S110 the actuation force 10 based on an electric motor 110 comprised in an electromechanical brake actuator 100. The method further comprises generating S120 output data for measuring the actuation force 10 by a sensor 120 comprised in the brake actuator 100. The method further comprises measuring S130, based on the output data, the actuation force 10. The method further comprises determining S140 the brake force 20 based on the measured actuation force 10.

The measuring S130 of the actuation force 10 and the determining S140 of the brake force 20 may be performed in a control unit of the electromechanical brake actuator 100.

The method may further comprise adjusting, based on the measured output data and on energy provided to the electric motor 110, the providing S110 of the actuation force 10.

The description and drawings merely illustrate the principles of the disclosure. It will thus be appreciated that those skilled in the art will be able to devise various arrangements that, although not explicitly described or shown herein, embody the principles of the disclosure as defined by the claims in view of the description and the drawings, and are included within its scope.

In particular, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

### LIST OF REFERENCE SIGNS

- 10: actuation force
- 20: brake force or torque
- 100: electromechanical brake actuator
- 110: electric motor
- 115: drive shaft
- 120: sensor
- 130: conversion mechanism
- 133: movable component, spindle nut
- 135: movable component, spindle
- 137: thrust bearing
- 139: movable or transmission component, gear
- 140: housing
- 150: control unit
- 210: brake mechanism
- S110, S120, S130, S140: steps of a method

## Claims

1. An electromechanical brake actuator (100) for a brake unit, wherein the brake unit comprises a brake mechanism (210) configured to convert an actuation force (10) from the brake actuator (100) into a brake force (20) for braking a wheel or an axle, **characterized by:**
an electric motor (110), configured to provide the actuation force (10); and
a sensor (120), configured to generate output data for measuring the actuation force (10).

2. The electromechanical brake actuator (100) according to claim 1, wherein the brake actuator (100) comprises a conversion mechanism (130) configured to convert a motor torque of the electric motor (110) into the actuation force (10),
**characterized in that**
the sensor (120) is rigidly attached to a fixed component of the conversion mechanism and/or to a housing (140) of the brake actuator (100).

3. The electromechanical brake actuator (100) according to claim 2, **characterized in that**
the conversion mechanism (130) comprises a spindle nut (133) and a spindle (135), wherein the spindle nut (133) is supported by a thrust bearing (137), and the sensor (120) is configured to measure a force exerted on the thrust bearing (137).

4. The electromechanical brake actuator (100) according to claim 1, wherein the brake actuator (100) comprises a conversion mechanism (130) configured to convert a motor torque of the electric motor (110) into the actuation force (10),
**characterized in that**
the sensor (120) is attached to a movable component (135) of the conversion mechanism.

5. The electromechanical brake actuator (100) according to claim 4, **characterized in that**
the conversion mechanism comprises a spindle nut (133) and a spindle (135), wherein the sensor (120) is attached to the spindle (135).

6. The electromechanical brake actuator (100) according to any one of the preceding claims, wherein the brake actuator (100) comprises a control unit (150) configured to control the electric motor (110),
**characterized in that**
the control unit (150) of the electric motor (110) is configured to receive the output data of the sensor (120).

7. The electromechanical brake actuator (100) according to claim 6, **characterized in that**
the control unit (150) is configured to adjust, based on the output data, a control of the electric motor (110).

8. The electromechanical brake actuator (100) according to any one of the preceding claims,
**characterized in that**
the sensor (120) comprises at least one of the following:
- a strain gauge,
- a piezoelectric element,
- a load cell,
- means for measuring a distance.

9. A disk brake unit for a wheel or an axle of a vehicle, wherein the disk brake unit comprises a caliper with disk pads configured to brake a disk fixed to the wheel or the axle, and is
**characterized by**
an electromechanical brake actuator (100) according to any one of the preceding claims, configured to apply an actuation force (10) on the caliper for braking the wheel or the axle.

10. A drum brake unit for a wheel or an axle of a vehicle, wherein the drum brake unit comprises a brake shoe configured to brake a drum fixed to the wheel or the axle, and is
**characterized by**
an electromechanical brake actuator (100) according to any one of the claims 1 to 8, configured to apply an actuation force (10) on the brake shoe for braking the wheel or the axle.

11. A method for determining by measurement a brake force (20) exerted by a brake unit comprising a brake mechanism (210) configured to convert an actuation force (10) from an electromechanical brake actuator (100) into a brake force (20) for braking a wheel or an axle,
**characterized by**:
providing (S110), based on an electric motor (110) comprised in the brake actuator (100), the actuation force (10);
generating (S120), by a sensor (120) comprised in the brake actuator (100), output data;
measuring (S130), based on the output data, the actuation force (10); and
determining (S140), based on the measured actuation force (10), the brake force (20).
